# EUROPÄISCHE PATENTSCHRIFT

(11) **EP 2 250 108 B1**
(45) Veröffentlichungstag und Bekanntmachung des Hinweises auf die Patenterteilung: **29.02.2012**
(21) Anmeldenummer: 08839953.0
(22) Anmeldetag: 20.10.2008
(51) Int. Cl.: B65G 47/26, F16D 37/02, F16D 63/00, F16D 65/14

(54) **VORRICHTUNG UND VERFAHREN ZUR FÖRDERUNG VON STÜCKGUT MIT KUPPELBARER ANTRIEBSVORRICHTUNG**
APPARATUS AND METHOD FOR CONVEYING PIECE GOODS, COMPRISING A CONNECTABLE DRIVING DEVICE
DISPOSITIF ET PROCÉDÉ DE TRANSPORT DE PRODUITS UN À UN À L'AIDE D'UN DISPOSITIF D'ENTRAÎNEMENT À EMBRAYAGE

(30) Priorität: 19.10.2007 AT 16872007
(43) Veröffentlichungstag der Anmeldung: 17.11.2010
(73) Patentinhaber: TGW Mechanics GmbH, 4600 Wels (AT)
(72) Erfinder: WOLKERSTORFER, Christoph, A-4600 Wels (AT)
(74) Vertreter: Ofner, Clemens
(86) Internationale Anmeldenummer: PCT/AT2008/000380
(87) Internationale Veröffentlichungsnummer: WO 2009/049346

(56) Entgegenhaltungen:
- EP-A- 0 446 992
- EP-A- 1 314 663
- WO-A-99/22156
- DE-A1- 2 533 893
- DE-A1- 4 333 625

## Beschreibung

Die Erfindung betrifft eine Fördervorrichtung, wie sie im Oberbegriff des Anspruches 1 beschieben ist, und ein Fördermittel, wie im Oberbegriff des Anspruches 29 beschrieben.

Aus dem Dokument EP 0 446 992 A1 ist eine Fördervorrichtung für Stückgut mit zwei Tragprofilen mit zumindest einem Fördermittel für mit diesem zu transportierenden Stückgut und mit einer Antriebsvorrichtung und mit zumindest einer betätigbaren Kupplung zwischen einem Antriebsmittel der Antriebsvorrichtung und dem Fördermittel bekannt. Die Kupplung weist einen zur Aufnahme eines Übertragungsmittels zwischen einem ersten und einem zweiten Kupplungselement ausgebildeten Spaltraum auf und ist dem Spaltraum benachbart ein eine Kraftkopplung zwischen den Kupplungselementen bewirkendes und von einer Steuer- oder Regeleinrichtung angesteuertes Regelelement angeordnet. Die Kraftkopplung zwischen dem Antriebsmittel und dem Fördermittel wird durch einen am Antriebsmittel drehfest angeordnetes ringförmiges, in einem Innenraum mit Druckluft beaufschlagbaren, elastische verformbares Balgelement gebildet, wobei die Druckluft über eine in einem Tragrahmen fest gehalterte Achse von dem auf der Achse drehbar angeordneten Antriebsmittel geführt wird.

Aus dem Dokument EP 1 314 663 A1 ist eine staudrucklose Staurollenbahn zum Fördern von Gegenständen auf Rollenbahnen bekannt, mit der ein Aneinanderstoßen der Gegenstände vermieden wird. Dazu ist die Rollenbahn in einzelne Abschnitte unterteilt, die unabhängig voneinander angetrieben und gebremst werden. Dazu dient eine Kupplungs-Bremseinheit, die über ein endloses Zugmittel dauernd rotierend angetrieben wird und mit einer Kupplungsscheibe drehfest verbunden ist. In axialer Richtung gegenüberliegend ist eine Bremsscheibe mit dem Tragrahmen fest verbunden. In einem Spaltraum zwischen der Kupplungsscheibe und der Bremsscheibe ist eine auf einer drehbaren Welle drehfest angeordnete Übertragungsscheibe. Über axial verstellbare und mit einem Kupplungsbelag und einem Bremsbelag versehene Zwischenscheiben erfolgt die Übertragung eines Antriebs- oder Bremsmoments auf die Welle und damit auf die Antriebsrolle. Die Verstellung der jeweiligen Zwischenscheibe erfolgt mittels einem Kupplungsmagnet und einem Bremsmagnet die für die jeweilige Funktion wahlweise angesteuert werden,

Aus dem Dokument WO 99/22156 A1 ist eine Bremseinrichtung mit einer gehäusefest angeordneten Bremsscheibe und einer rotierenden und die Bremsscheibe topfförmig radial umfassenden Antriebsscheibe bekannt. Die feststehende Bremsscheibe ist als ringförmiger Stator mit einer über eine Leitung mit elektrischer Energie ansteuerbaren Wicklung zur Erzeugung eines Magnetfeldes ausgebildet. In einem ringförmigen Spaltraum ist zwischen der Bremsscheibe und einer inneren Oberfläche der topfförmigen Antriebsscheibe ein pulverförmiges Medium aus Metallpartikeln als Übertragungsmittel vorgesehen. Durch entsprechende Ansteuerung der Wicklung wird der Zustand des Mediums in dem Spaltraum im Falle einer erforderlichen Bremswirkung von einem liquiden Zustand in einen semifesten Zustand durch Aufbau des Magnetfeldes verändert und damit eine Bremswirkung an der Antriebsscheibe erreicht.

Aus dem Dokument DE 43 33 625 A1 ist eine Rollenförderbahn mit über eine feststehende Achse rotierbar angeordneten Rollen bekannt, wobei in den entgegengesetzten Rollenböden einerseits eine mit Druckluft beaufschlagbare Antriebskupplung zwischen einem auf der Achse drehbar gelagerten Antriebsmittel und der Rolle und im weiteren Rollenboden eine mit Druckluft beaufschlagbare Bremskupplung zwischen dem Rollenboden und einer in axialer Richtung verstellbaren Bremsscheibe angeordnet ist.

Aus dem Dokument DE 25 33 893 A1 ist eine drehzahlregelbare Kupplung für eine Rotationsmaschine bekannt, bei der ein, eine Wicklung aufweisender Stator, an einem feststehenden Teil einer Rotationsmaschine befestigt ist. Antriebsseitig ist ein Rotor vorgesehen, der im Stator drehbar gelagert ist. Weiters ist antriebsseitig ein Anker angeordnet, der vom antriebsseitigen Rotor durch einen Zwischenraum getrennt ist, in welchem eine magnetische Flüssigkeit unter Abdichtung vorgesehen ist. Durch Anlegen einer elektrischen Spannung an die Wicklung wird die magnetische Flüssigkeit in ihren physikalischen Eigenschaften regelbar verändert und damit die Drehzahlregelung erreicht.

Aus der DE 20 2004 07 435 U1 ist eine Fördereinrichtung mit einem akkumulierenden Rollenförderer, mit einer Förderstrecke mit beabstandet zueinander parallel ausgerichteten Transportrollen bekannt. Die Rollenbahn ist in eine Mehrzahl von Segmenten unterteil, die jeweils eine Anzahl von Förderrollen aufweisen. Je Segment ist eine so genannte Kupplungsrolle vorgesehen, die mit einem gemeinsamen Antrieb antriebsverbunden sind und die mit den weiteren Rollen des jeweiligen Segments ebenfalls antriebsverbunden sind. Die Kupplungsrolle ist mit einer elektrischen Kupplung versehen, über welche eine An- und Abkopplung vom gemeinsamen Antriebsstrang steuerbar ist und damit die Förderstrecke segmentweise zu- oder abgeschaltet werden kann. Die elektrische Kupplung ist in der Kupplungsrolle integriert angeordnet und ausgelegt, um über Reibschluss die Antriebsleistung von einem Antriebselement z.B. Kettenrad auf ein Kupplungselement der Rolle zu übertragen bzw. nach Aufhebung des Reibschlusses diese und damit den Transport in dem jeweiligen Segment zu unterbrechen. Aus der US 2006/0266625 A1 ist eine weitere akkumulierende Fördereinrichtung, bestehend aus einer Anzahl von in einer Förderrichtung aneinander gereihter Gurtförderer bekannt. Jeder Gurtförderer ist mit einem eigenen Antrieb versehen und über eine Steuer- und Regeleinrichtung und eine im Antriebsstrang, entweder dem Antriebsmotor oder einem Antriebselement für den Gurt angeordnete elektrische Kupplung zu- oder abschaltbar.

Aufgabe der Erfindung ist es, eine Fördervorrichtung zu schaffen, mit der eine rasch realisierende Anpassung des Betriebsmodus mehrere über eine gemeinsame Antriebsvorrichtung betriebener Fördermittel erreicht wird.

Diese Aufgabe der Erfindung wird durch die im Kennzeichenteil des Anspruches 1 wiedergegebenen Merkmale erreicht. Der überraschende Vorteil dabei ist, dass dadurch ein kompakter Aufbau der Fördervorrichtung bei minimierter Anzahl von Antriebskomponenten erreicht wird.

Möglich sind aber auch Ausbildungen wie in den Ansprüchen 2 und 3 beschrieben, weil damit ein alternierender Antriebs- oder Bremsmodus über unabhängig ansteuerbarer Komponenten erreicht wird.

Möglich sind dabei auch Ausbildungen wie in den Ansprüchen 4 und 5 beschrieben wodurch eine auf den Anwendungsfall bezogene Auslegung für den Fördermodus und/oder Bremsmodus erreicht wird.

Durch die in den Ansprüchen 6 bis 12 beschriebenen vorteilhaften Ausbildungen werden mechanische, einem Verschleiß unterliegende Bauteile vermieden wodurch einerseits ein wartungsarmer Betrieb sichergestellt ist und andererseits eine feinfühlige Regelung der zu übertragenden Drehmomente erreicht wird. Dies führt auch zu einer Verringerung von Belastungen der Umgebung wie Lärmbelastung, Staubbelastung etc., sowie zu einer sehr hohen Prozesssicherheit und damit zur Vermeidung von Ausfällen beim Warendurchsatz eines Warenumschlagsystems.

Es sind aber auch Ausbildungen nach den Ansprüchen 13 und 14 vorteilhaft, wodurch eine hohe Flexibilität bei der Auslegung von Fördervorrichtungen für die unterschiedlichen Anforderungen erreicht wird, die an Transportsysteme zur Optimierung eines Warenflusses zu stellen sind.

Die vorteilhaften Ausbildungen gemäß den Ansprüchen 15 bis 18 gewährleisten eine gegen Außeneinflüsse gekapselte und damit wenig störanfällige Ausbildung der Fördervorrichtung.

Durch die in den Ansprüchen 19 bis 21 beschriebenen vorteilhaften Ausbildung werden Varianten der Fördervorrichtung sehr einfach erreicht wodurch auf diese auf die speziellen Eigenschaften des zu fördernden Guts abstimmbar sind und damit eine Optimierung des Warenflusses und eine hohe Energieeffizienz erreicht wird.

Es ist aber auch eine Ausbildung nach Anspruch 22 vorteilhaft, wodurch eine Fördervorrichtung erreicht wird, die einen modulartigen Aufbau für eine Vielzahl von Fördersektionen mit einer gemeinsamen, für einen Dauerbetrieb mit einem Durchschnittsenergiebedarf auslegbaren Antriebsvorrichtung, ermöglicht, wodurch übermäßige Energiespitzen in einem Versorgungsnetz weitestgehend vermieden werden.

Möglich ist aber auch eine Ausbildung nach Anspruch 23 weil damit eine hohe Flexibilität in der technischen Auslegung derartiger Fördervorrichtungen erreicht wird.

Vorteilhafte Ausbildungen beschreiben auch die Ansprüche 24 bis 28 wodurch eine sehr kompakte und für eine kostengünstige Serienfertigung geeignete Ausbildung einer Kupplungs- und/oder Bremsrolle erreicht wird und mit der ein nahezu emissionsfreier Betrieb auch bei hohen Schaltzahlen erreicht wird.

Die Erfindung betrifft aber auch ein Fördermittel einer Fördervorrichtung wie im Anspruch 29 beschrieben. Der überraschende Vorteil dabei ist die damit erreichte Flexibilität in der Auslegung von Fördersystemen für vielschichtige Transportvorgänge zur Optimierung von Durchlaufzeiten von Gütern bei der Warenlagerung und Wareverteilung. Erreicht wird damit aber auch eine modulartige Ausbildung und damit eine kostengünstige Serienfertigung wie auch eine Vereinfachung bei Ersatz von Komponenten im Falle von Instandhaltungen sowie eine Verringerung von Kosten für eine Ersatzteilhaltung.

Vorteilhaft sind dabei auch Ausbildungen wie in den Ansprüchen 30 und 31 beschrieben wodurch wahlweise der Einsatz von Standardkomponenten erreicht wird.

Zum besseren Verständnis der Erfindung wird diese anhand der in den Figuren dargestellten Ausführungsbeispiele näher erläutert.

Es zeigen:
- Fig. 1: eine erfindungsgemäße Fördervorrichtung in Ansicht;
- Fig. 2: die Fördervorrichtung in Draufsicht;
- Fig. 3: ein erfindungsgemäßes Fördermittel geschnitten;
- Fig. 4: eine weitere Ausbildung der erfindungsgemäßen Fördervorrichtung in Ansicht;
- Fig. 5: eine weitere Ausbildung der erfindungsgemäßen Transportvorrichtung in vereinfachter Darstellung;
- Fig. 6: eine erfindungsgemäße Ausbildung einer Antriebs- und/oder Bremseinheit der erfindungsgemäßen Fördervorrichtung.

Einführend sei festgehalten, dass in den unterschiedlich beschriebenen Ausführungsfonnen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

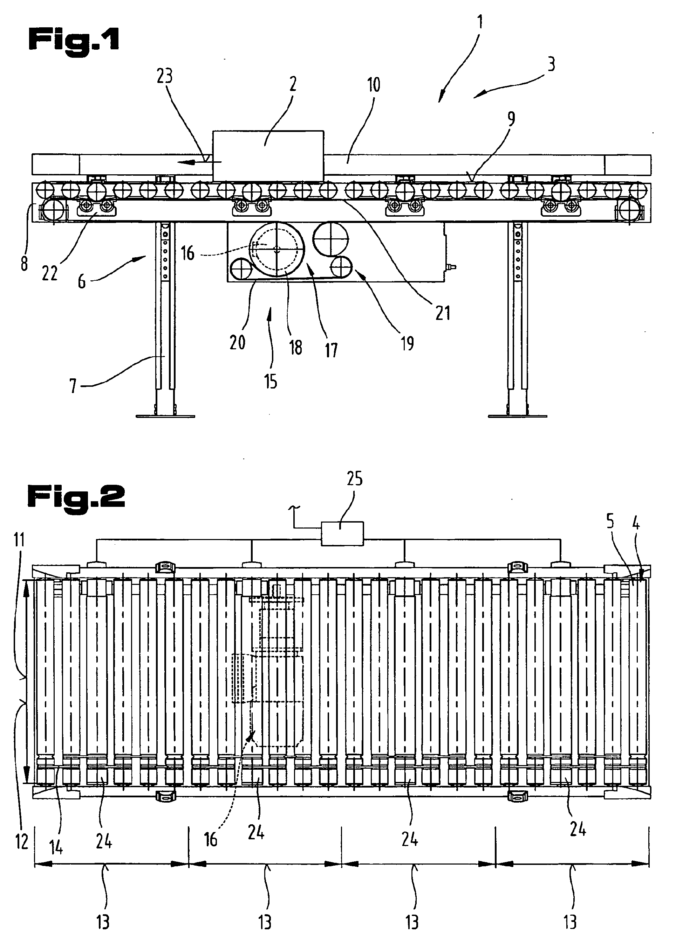

In den Fig. 1 und 2 ist eine Fördervorrichtung 1 zum Transport von Stückgut 2, z.B. von Warenträgem, Behältern, Gebinden, Pakete, etc., ausgebildet als Rollenförderer 3 gezeigt, wobei Fördermittel 4 durch eine Anzahl zueinander beabstandeter und parallel zueinander ausgerichteter Förderrollen 5 gebildet sind.

Die Fördervorrichtung 1 weist nach dem gezeigten Ausführungsbeispiel auf einem Traggestell 6 bestehend aus Stützbeinen 7 und zumindest zwei parallel zueinander und parallel zu einer Aufstandsfläche angeordnete Tragprofile 8 auf, die die Fördermittel 4, im gezeigten Ausführungsbeispiel Förderrollen 5 lagern. An den Tragprofilen 8 sind, eine durch die Oberseite der Förderrollen 5 gebildeten Transportebene 9 für das Stückgut 2, überragende Führungsprofile 10 in Längsrichtung der Fördervorrichtung 1 angeordnet, durch welche eine Förderbreite 11, welche in etwa auch einer Rollenlänge 12 entspricht, begrenzt wird.

Die Förderrollen 5 sind bei der beispielsweise gezeigten Fördervorrichtung 1 zu vier Fördersektionen 13 gruppiert und je Fördersektion 13 sind in an sich bekannter Weise jeweils benachbarte Förderrollen 5 mit einem endlos umlaufenden Antriebsstrang 14, z.B. Schnurriemen, Bandriemen, Kette, etc., antriebsverbunden.

Die Fördervorrichtung 1 mit den vier Fördersektionen 13 wird mittels einer gemeinsamen Antriebsvorrichtung 15, z.B. Antriebsmotor 16 über z.B. einer Flachriemenscheibe 17 und einem endlos umlaufenden und über eine Spanneinrichtung 19 und an den Unterseiten der Förderrollen 5 entlang geführtem Antriebsriemen 20 angetrieben. Selbstverständliche wäre auch der Einsatz eines Kettenantriebes ebenso möglich.

Je Fördersektion 13 wird der Antriebsstrang 20, insbesondere ein Flachriemen 21 an eine der Förderrollen 5 der Fördersektion 13 zur Erhöhung des Reibschlusses zwischen dem Flachriemen und der Förderrolle 5 mittels Rollapparate 22 zur Ausbildung eines Umschlingungswinkels gegen die Unterseite der Förderrolle 5 gedrückt, wodurch die Übertragung der erforderlichen Antriebskraft für die Förderung des Stückgutes 2 in Förderrichtung - gemäß Pfeil 23 - vom Flachriemen 21 auf eine der Förderrollen 5 jeder Fördersektion 13 über Reibschluss sicher übertragen wird.

Die vom Antriebsriemen 20 und mittels der Rollapparate 22 mit der Antriebskraft beaufschlagte Förderrolle 5 ist als Kupplungs- und/oder Bremsrolle 24 ausgebildet, wodurch mittels einer Steuer- oder Regeleinrichtung 25 die einzelnen Fördersektionen 13 bedarfsabhängig in einem Go/Stopp- Modus betreibbar sind und damit die Fördervorrichtung 1 als ein so genannter Durchlauf- oder Stauförderer ausgebildet ist.

Über nicht weiter gezeigte, aus dem Stand der Technik bekannte Erfassungsmittel, z.B. Näherungssensoren, Lichtschranken, Scanner etc., an jeder Sektion 13 und der Steuer- und Regeleinrichtung 25 ist eine Antriebsselektion der einzelnen Sektionen möglich und wird dadurch eine Vollauslastung der Fördervorrichtung 1 auch bei wechselnden An- und Abfördergegebenheiten im Warenfluss erreicht.

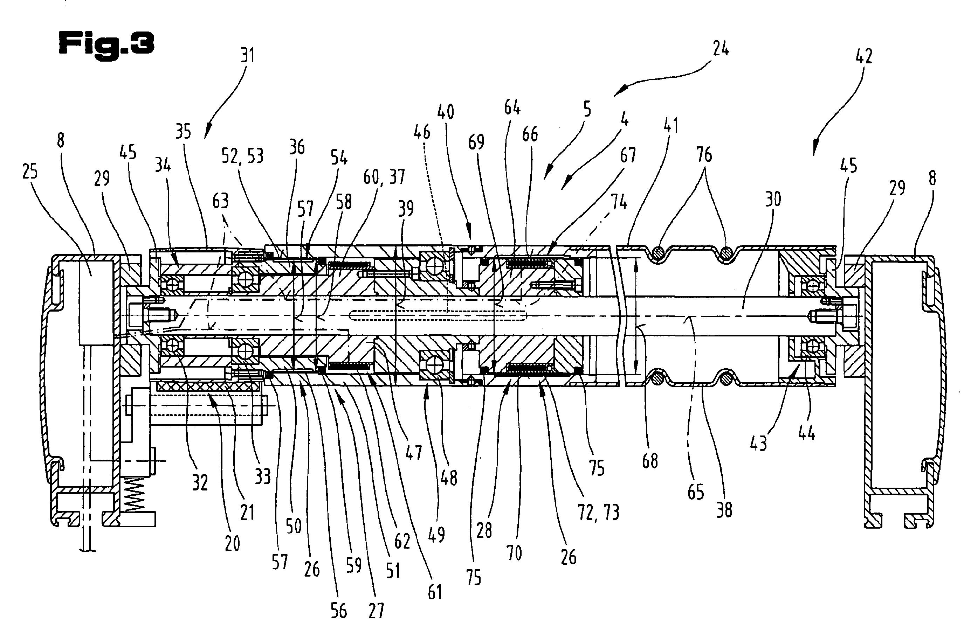

In der Fig. 3 ist eine mögliche Ausbildung der als Kupplungs- und/oder Bremsrolle 24 ausgebildeten Förderrolle 5 mit integrierten Kupplungen 26 gezeigt, wovon eine Kupplung als Antriebskupplung 27 und eine als Bremskupplung 28 konzipiert ist.

Der Aufbau der Kupplungs- und/oder Bremsrolle 24 sieht nach dem gezeigten Ausführungsbeispiel eine in Halterungen 29 an den Tragprofilen 8 drehfest gehaltene und die Förderrolle 5 in gesamter Länge querende feststehende Achse 30 auf. Selbstverständlich ist auch eine Ausbildung möglich wonach die Förderrolle über beidseits vorgesehene Achsstummel an den Tragprofilen 8 gehalten sind.

An einem Endbereich 31 der Förderrolle 5 ist über eine bevorzugt aus zwei zueinander beabstandeten Kugel- oder Wälzlager 32, 33 gebildeten Lageranordnung 34 ein Antriebsmittel 35, z.B. Rolle, Seilrad, Kettenrad, etc., auf der Achse 30 oder Achsstummel drehbar gelagert. Das Antriebsmittel 35 weist einen Rohrfortsatz 36 auf, welcher in ein, ein Rollenelement 37 der Förderrolle 5 ausbildendes Rohr 38 einragt. Im gezeigten Ausführungsbeispiel sind das Antriebsmittel 35 und der Rohrfortsatz 36 aus Montage- und Fertigungsgründen zweiteilig ausgebildet. Selbstverständlich ist aber auch eine einstückige Ausbildung durchaus möglich.

Das Rohr 38 weist einen der Förderrollen 5 entsprechendem Außendurchmesser 39 auf und ist für Montagezwecke in zwei Längsabschnitte geteilt, wobei die Abschnitte in einem Überlappungsbereich 40 unter Beibehaltung des Außendurchmessers 39 verbunden sind.

Mit dem Rollenelement 37 ist weiter ein relativ dünnwandiges Rohr 41 bis zu einem weiteren Endbereich 42 der Förderrolle 5 erstreckend angeordnet und ist in diesem Endbereich 42 die Förderrolle 5 mit dem zweiteiligen Rollenelement 37 und dem Rohr 41 über eine weitere Lageranordnung 43, insbesondere ein Rillenkugellager 44 auf der Achse 30 bzw. einem Achsstummel gelagert. Die Lageranordnungen 34, 43 in den Endbereichen 31, 42 sind mittels Deckscheiben 45 zumindest staubdicht gekapselt.

Das Rollenelement 37 mit dem mit diesem verbundene Rohr 41 ist gegenüber der Achse 30 bzw. mit einem mit der Achse 30 drehfest z.B. mittels eines Einlegekeils 46 oder Klebung etc. verbundenen Lagertragring 47 und einer durch bevorzugt einen weiteren Rillenkugellager 48 ausgebildeten Lageranordnung 49 exakt koaxial gegenüber dem rohrförmigen Fortsatz 36 des Antriebsmittels 35 gelagert.

Die gezeigte Lagerung des Antriebsmittels 35 mit dem Fortsatz 36 und des Rollenelements 37 mit dem Rohr 41 auf der Achse 30 gewährleistet eine unabhängige, relative Drehbewegung zueinander.

Die Antriebskupplung 27 wird durch den Rohrfortsatz 36 des Antriebsmittels 35, der in das Rollenelement 37 einragt, und ein erstes Kupplungselement 50 bildet und dem Rollenelement 37 gebildet, das ein weiteres Kupplungselement 51 ausbildet.

Zwischen einer äußeren Oberfläche 52 des in das Rollenelement 37 einragenden Fortsatzes 36 und einer inneren Oberfläche 53 des Rollenelements 37 ist ein Spaltraum 54 zur Aufnahme eines Übertragungsmittels 56, z.B. einem Medium das in zumindest einem physikalischem Parameter oder mechanischen Parameter veränderbar ist, vorgesehen.

Als Übertragungsmittel 56 sind bspw. aus dem Stand der Technik flüssige oder pastöse, aber auch pulver- oder granulatförmige Medien mit einem hohen elektrorheologischen oder magnetorheologischen Effekt bekannt. Diese weisen eine geringe Basisviskosität oder Scherfestigkeit auf, und sind durch Einwirkung eines elektrischen Spannungsfeld oder eines Magnetfeldes in einem großen Regelbereich in Sekundenbruchteilen in ihren Viskositäts- oder Festigkeitswerten veränderbar und eigenen sich daher für eine regelbare Kraftkopplung zwischen den Kupplungselementen 50, 51. Darüber hinaus unterliegen derartige Medien nahezu keiner Abrasion und sind Materialkomposite bekannt welche eine geringe Leitfähigkeit und gute Schmiereigenschaften aufweisen, wodurch ein störungsfreier, wartungsarmer Langzeitbetrieb bei geringer Umgebungsbelastung erreicht wird.

Eine Spaltform ist an keine bestimmte Raumform gebunden und kann an entsprechenden Eigenschaften des vorgesehenen Mediums, z.B. Viskosität, Partikelgröße etc., angepasst werden.

Nach dem beispielsweise gezeigten Ausführungsbeispiel wird der Spaltraum 54 dadurch gebildet, dass ein Außendurchmesser 57 des Rohrfortsatzes 36 kleiner ist als ein Innendurchmesser 58 des Rollenelementes 37. Es ist aber auch möglich Ausnehmungen am Innendurchmesser 58 und/oder Außendurchmesser 57 vorzusehen, z.B. umlaufende Nuten, partielle Vertiefungen etc.

Der Spaltraum 54 ist insbesondere dann wenn in diesem ein fluidisches Übertragungsmittel 56 vorgesehen ist, durch zwei voneinander in Richtung der Rollenlänge beabstandet angeordnete Dichtungsringe 59 abgedichtet.

Benachbart zu dem Spaltraum 54 ist auf einer ebenfalls mit der Achse 30 bzw. dem Lagertragring 47 drehfest verbundenen Traghülse 60, innerhalb des Rollenelements 37, ein Regelelement 61 angeordnet mit welchem der zu verändernde physikalisch Parameter beeinflussbar ist, z.B. eine Elektrospule 62, welche über eine bevorzugt in der Achse 30 verlaufende Leitung 63 mit der Steuer- und Regeleinrichtung 25 und einer Energiequelle verbunden ist.

Das Regelelement 61 ist für den Aufbau eines elektrischen Spannungsfeldes, Magnetfeldes etc., vorgesehen und im unmittelbaren Nahebereich, insbesondere innerhalb eines Wirkbereiches des erzeugten Feldes zu dem Spaltraum 54 auf der Traghülse 60 feststehend angeordnet.

Bei Beaufschlagung des Regelelementes 61 mit elektrischer Energie wird eine veränderbare Kraftkopplung zwischen den Kupplungselementen 50, 51 der Antriebskupplung 27 erreicht, deren Größenordnung über die Steuer- und Regeleinrichtung 25 steuerbar ist.

Nach einer bevorzugten Weiterbildung ist der Antriebskupplung 27 in Richtung des Endbereiches 42 mit der Lageranordnung 43 beabstandet die Bremskupplung 28 im Rollenelement 37 angeordnet.

Diese weist ein ringförmiges mit der Achse 30 bzw. einem Achsstummel drehfest verbundenes Bremselement 64 auf, welches bevorzugt in einer zu einer Längsmittelachse 65 der Achse 30 senkrecht ausgerichteten Ebene geteilt ausgebildet ist. Zwischen einer äußeren Umfangsfläche 66 des Bremselementes 64 und der inneren Oberfläche 53 des Rollenelements 37 ist ein weiterer Spaltraum 67 dadurch ausgebildet, dass ein Innendurchmesser 68 des Rollenelementes 37 größer ist als ein Außendurchmesser 69 des Bremselements 64.

Im gezeigten Ausführungsbeispiel ist eine umlaufenden nutförmigen Vertiefung 70 vorgesehen, die in einem Außenumfang 71 des Bremselements 64 eingebracht ist, in der ein weiteres, z.B. durch eine Elektrospule 72 gebildetes Regelelement 73 angeordnet. Dieses ist zur Energiebeaufschlagung über eine weitere vorzugsweise in der Achse 30 verlaufend angeordnete Leitung 74 mit der Steuer- und Regeleinrichtung 25, die bspw. im Tragprofil 8 angeordnet ist, leitungsverbunden.

Die Ausbildung des Spaltraumes 67 der Bremskupplung 28 ist etwa analog zu der Antriebskupplung 27 ausgebildet und im Falle eines in diesem vorgesehenen fluidischen Übertragungsmittel 56 an stirnseitigen Endbereichen des Bremselements 64 gegenüber der inneren Oberfläche 53 des Rollenelements 37 mittels Dichtungsringe 75 abgedichtet.

Zur Funktion der beschriebenen Kupplungs- und/oder Bremsrolle 24, die wie bereits unter den vorhergehenden Figuren beschrieben, bspw. mit zumindest einem weiteren Fördermittel 4, z.B. Förderrolle 5, zur Ausbildung der Fördersektion 13, z.B. im Endbereich 42 der Kupplungs- und/oder Bremsrolle 24 mittels Schnurriemen 76 bzw. andere Übertragungsmittel, z.B. Flachriemen, Kette, antriebsverbunden ist, wird folgendes ausgeführt.

Die Drehbewegung der Kupplungs- und/oder Bremsrolle 24 erfolgt über die in den vorhergehenden Figuren dargestellte Antriebsvorrichtung mittels des beispielsweise als Flachriemen ausgebildeten Antriebsstranges über Reibschluss des Flachriemens 21 an einer Unterseite des als Rolle ausgebildeten Antriebsmittels 35 und dem Kraftschluss in der Antriebskupplung 27. Zur Erzielung dieses Kraftschlusses dient bspw. in dem beschriebenen Ausführungsbeispiel das in dem Spaltraum 54 angeordnete Übertragungsmittel 56, das eine veränderbare Kraftkopplung, durch Veränderung wenigstens eines physikalischen Parameters zwischen den Kupplungselementen 50, 51 bewirkt.

Die Kupplungs- und/oder Bremsrolle 24 ist daher solange der Kraftschluss in der Antriebskupplung 27 aufrecht ist in drehender Bewegung und mit dieser weitere Förderrollen 5 der Fördersektion 13.

Soll nun der Transportfluss eines Stückguts 2 in einer der Fördersektionen 13 unterbrochen werden erfolgt dies durch Rückführung des veränderten physikalischen Parameters des Übertragungsmittels 56 in seinen Ausgangszustand durch entsprechende Ansteuerung des Regelelementes 61 der Antriebskupplung 27, wodurch die Kraftkoppelung zwischen den Kupplungselementen 50, 51 unterbrochen wird.

Bei der beschriebenen Ausbildung der Kupplungs- und/oder Bremsrolle 24 mit der weiteren als Bremskupplung 28 ausgebildeten Kupplung 26 ist es möglich, gleichzeitig mit der Unterbrechung der Kraftkoppelung in der Antriebskupplung 27, durch Ansteuerung des Regelelements 67 der Bremskupplung 28 und durch Veränderung eines physikalischen Parameters des in dem Spaltraum 67 vorgesehenen Übertragungsmittels 56, eine Kraftkoppelung zwischen dem mit der Achse 30 drehfest verbundenen Bremselement 64 und dem Rollenelement 37 herbeizuführen, wodurch es zu einem nahezu nachlauffreiem stoppen der Kupplungs- und/ oder Bremsrolle kommt und damit die Fördersektion ruhend gestellt wird.

Das Stückgut kommt also unmittelbar zum Stillstand und durch unabhängige Ansteuerung der Kupplungs- und/oder Bremsrollen 24 jeder Fördersektion eignet sich die so ausgebildete Fördervorrichtung 1 für einen getakteten Betriebsmodus zum Transport des Stückguts und damit insbesondere als Stauförderer.

Es wird aber auch darauf hingewiesen, dass wie schon aus der Definition, Kupplungs- und/ oder Bremsrolle 24, hervorgeht, es selbstverständlich möglich ist, in der Förderrollen 5 in Abwandlung zu der beschriebenen Ausführung nur eine Antriebskupplung 27 oder nur eine Bremskupplung 28 vorzusehen.

Damit öffnen sich aber auch eine Reihe weiterer Anwendungsgebiete der Fördervorrichtung 1 wie bspw. anstelle der bisher beschriebenen Horizontalförder- oder Stauförderstrecken auch Steig- und/oder Gefälleförderstrecken. Durch den entsprechenden Einsatz bei derartigen Förderstrecken der Kupplungs- und/oder Bremsrollen 24 infolge des hohen Regelbereiches der für die Antriebskupplung 27 und/oder Bremskupplung 28 feinfühlig regelbaren Übertragungsmittel 54 kann ein Antreiben oder Bremsen bei derartigen Förderstrecken entsprechend vorgegebenen Eigenschaften des Stückguts 2 z.B. Abmessungen, Gewicht, etc. durch angepasste Steuerungsmaßnahmen der Steuer- und Regeleinrichtung 25 Einfluss genommen werden. Möglich sind dabei auch nicht in Sektionen unterteilte Förderstrecken mittels der Fördervorrichtung 1 zu betreiben, mit in vorgegebenen Abständen mit der Antriebsvorrichtung 15 antriebsverbundenen Kupplungs- und/oder Bremsrollen 24 oder Förderrollen 5, die nur mit der Antriebskupplung 27 oder nur mit der Bremskupplung 28 oder aber mit der Antriebskupplung 27 und der Bremskupplung 28 versehen sind.

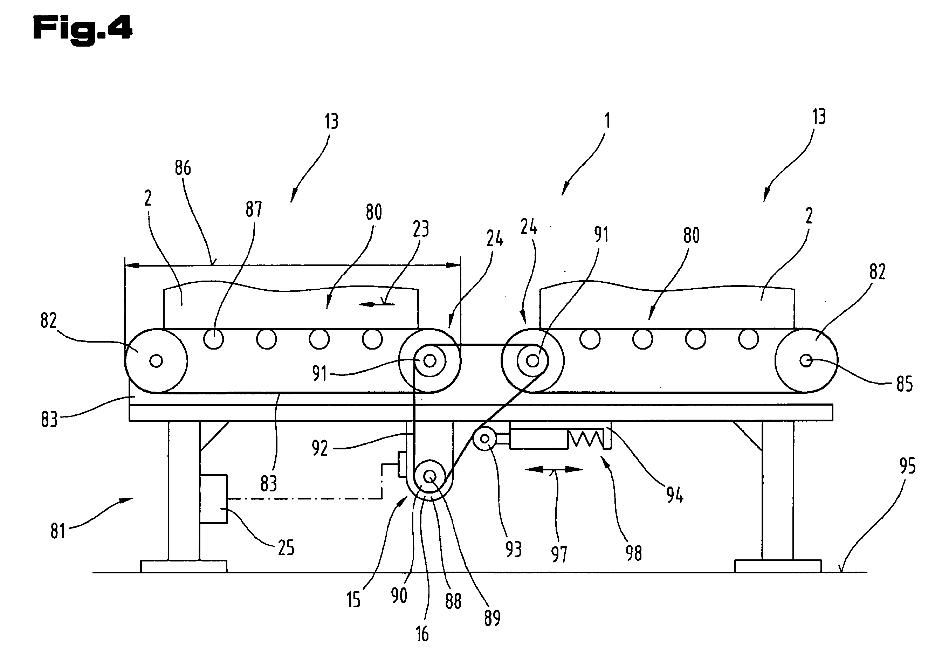

In der Fig. 4 ist nun eine weitere mögliche Ausbildung der Fördervorrichtung 1 für Stückgut 2 gezeigt, bei der beispielsweise zwei Fördersektionen 13 durch zwei Band- oder Riemenförderer 80 gezeigt die durch eine gemeinsamen Antriebsvorrichtung 15 betrieben werden.

Auf einem gemeinsamen Untergestell 81 sind in Förderrichtung -gemäß Pfeil 23 -, unmittelbar aneinander grenzend die Band- oder Riemenförderer 80 angeordnet, wovon jeder einen endlos um zwei Umlenkrollen 82 geführten Gurt 83 aufweist und die Umlenkrollen 82, um im Untergestell 81 bzw. Längsprofilen 84 feststehend angeordnete Achsstummeln 85 drehbar gelagert sind. In einem Abstand 86 der grundsätzlich eine Förderlänge des Band- oder Riemenförderers 80 vorgibt, sind bspw. eine Anzahl von Stützrollen 87 zur Unterstützung des Gurts 83 an den Längsprofilen 84 drehbar gelagert. Die Antriebsvorrichtung 15 bildet ein am Untergestellt 81, bevorzugt in hängender Anordnung befestigter Antriebsmotor 87, z.B. der Antriebsmotor 16, der in etwa zwischen den einander unmittelbar gegenüberliegenden Umlenkrollen 82 positioniert ist. Auf einer Antriebswelle 89 des Antriebsmotors 88 ist bspw. ein Kettenrad 90 drehfest angeordnet. Des Weiteren weisen die einander zugewandten Umlenkrollen 82 die als Kettenräder 91 ausgebildeten Antriebsmitteln 35 auf und ist ein umlaufender Kettenstrang 92 die Antriebsverbindung zwischen dem Kettenrad 90 des Antriebsmotors 16 und den Kettenrädern 91 der Umlenkrollen 82. Bevorzugt wirkt an einem Verbindungsstrang zwischen dem Kettenrad 90 des Antriebsmotors 16 und einem der Kettenräder 91 der Umlenkrollen 82 eine die Spannung des Kettenstranges 92 regelndes Spannrad 93 an, das bspw. längs einer Linearführung 94 an einer Unterseite 95 der Längsprofile 84 in zu einer Aufstandsfläche 96 parallelen Richtung - gemäß Doppelpfeil 97 - verstellbar geführt ist und unter Vorspannung durch eine Federanordnung 98 gegen den Kettenstrang 92 gedrückt wird, wodurch dieser auch nach nutzungsbedingter Verlängerung der Kette kontinuierlich gespannt bleibt.

Die mit den Antriebsmitteln 35 versehenen Umlenkrollen 82 sind nunmehr bevorzugt, entsprechend der gemäß Fig. 3 beschriebenen Ausbildung mit der Antriebskupplung und ggf. auch der Bremskupplung versehen, wodurch diese als die zuvor beschriebene Kupplungs- und/oder Bremsrolle 24 wirken und für einen, über die Streuer- und Regeleinrichtung 25 steuerbaren, Go/Stopp-Betriebsmodus der Band- oder Riemenförderer 80 ausgelegt sind. Damit ist die Fördervorrichtung 1 mit den zwei Fördersektionen 13 sowohl als Durchlaufförderer wie auch als Stauförderer einsetzbar.

Selbstverständlich wird noch darauf hingewiesen, dass die gezeigte Fördervorrichtung 1 mit den durch zwei Band- oder Riemenförderer 80 gebildeten zwei Fördersektionen 13 um weitere derartige und insbesondere modulartig ausgebildete Band- oder Riemenförderer 80, bei entsprechender Auslegung der Antriebsvorrichtung 15, erweiterbar und über einen gemeinsamen Antriebsmotor 16 bei Auslegung der Umlenkrollen 82 als Kupplungs- und/oder Bremsrollen 24 betreibbar ist.

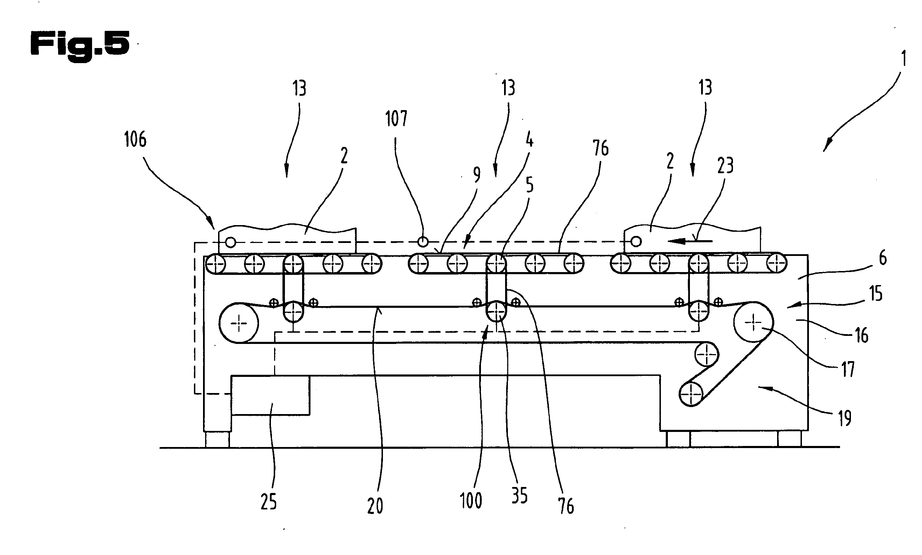

In der Fig. 5 ist ein weiteres Ausführungsbeispiel der Fördervorrichtung 1 zum Transport von Stückgut 2 mit bspw. drei der Fördersektionen 13 gezeigt, die von einer gemeinsamen Antriebsvorrichtung 15, z.B. dem Antriebsmotor 16, angetrieben wird.

In dem Traggestell 6 sind beispielsweise jeweils fünf eine Transportsektion 13 ausbildende Fördermittel 4, insbesondere im gezeigten Beispiel die angetriebenen Förderrollen 5 in Förderrichtung - gemäß Pfeil 23 - beabstandet und parallel zueinander ausgerichtet drehbar gelagert. Die Fördermittel 4 einer Fördersektion 13 sind untereinander in bekannter Weise antriebsverbunden.

Im Traggestell 6 ist unterhalb den Förderrollen 5 die Antriebsvorrichtung 15 mit dem endlos umlaufenden Antriebsriemen 20 mit zumindest einem parallel zur Transportebene 9 verlaufenden Antriebstrum, über nahezu einer Gesamtlänge der Fördervorrichtung 1 erstreckend, angeordnet.

Bspw. ist gezeigt, wie der Antriebsriemen 20 über eine Flachriemenscheibe 17 des Antriebsmotors 16 und einer anschließenden Spanneinrichtung 19 und einer weiteren Umlenkscheibe geführt ist.

An dieser Stelle sei ergänzend vermerkt, dass die gezeigte Antriebsvorrichtung 15 selbstverständlich auch als Kettentrieb mit einer umlaufenden Antriebskette oder Seiltrieb etc. ausgeführt sein kann.

Je Fördersektion 13 ist eine der Fördermittel 4 über eine im Traggestell 6 angeordnete Antriebs- und/oder Bremseinheit 100 mit der Antriebsvorrichtung 15, insbesondere über Reibschluss des Antriebsmittels 35 mit dem Flachriemen 20, in einem Antriebsmodus oder Bremsmodus, entsprechend Steuer- und Regelvorgaben der Steuer- und Regeleinrichtung 25, betreibbar.

Die Antriebs- und/oder Bremseinheiten 100 jeder Fördersektion 13 sind mit der Steuer- und Regeleinrichtung 25 bevorzugt leitungsverbunden.

Dies ermöglicht über die gemeinsame Antriebsvorrichtung 15, die Fördersektionen 13 individuell nach Steuerungsvorgaben für eine Durchlauf- oder Taktförderung des Stückguts 2 zu betreiben.

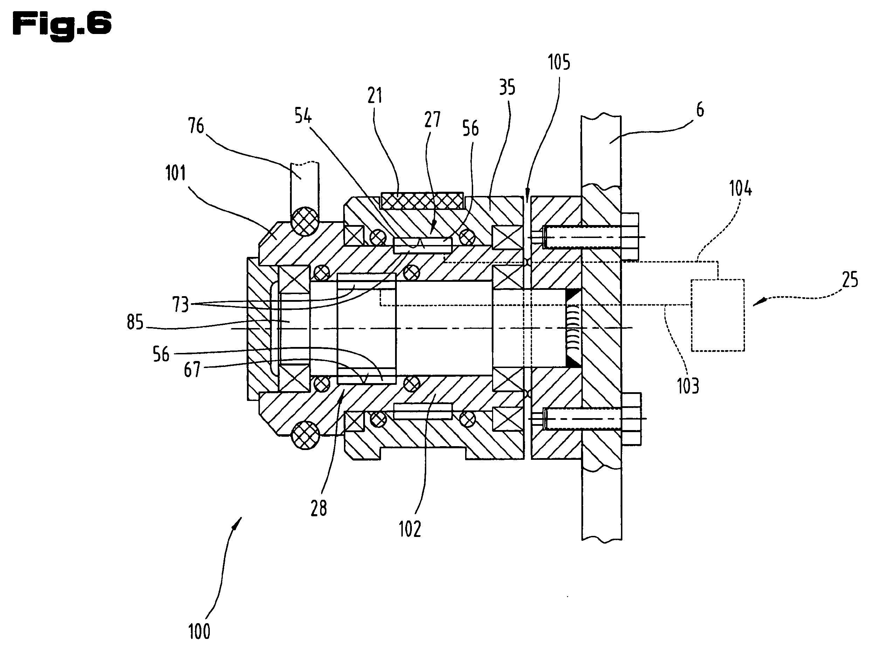

In der Fig. 6 ist nunmehr im Detail eine mögliche Ausbildung der mit der Antriebskupplung 27 und der Bremskupplung 28 ausgestatteten Antriebs- und/oder Bremseinheit 100 gezeigt.

Auf dem gestellfest angeordneten Achsstummel 85 ist eine Antriebsscheibe 101 drehbar gelagert, welche bspw. mit dem Schnurriemen 76 mit einer der Förderrollen 5 in Antriebsverbindung ist. das

Auf einer Nabe 102 der Antriebsscheibe 101 ist das in Reibschluss mit dem Flachriemen 21 stehende Antriebsmittel 35 drehbar gelagert. Zwischen der Nabe 102 der Antriebsscheibe 101 und dem feststehenden Achsstummel 85 ist der Spaltraum 67 mit dem Übertragungsmittel 56 der Bremskupplung 28 angeordnet.

Zwischen der Nabe 102 und dem auf dieser drehbar gelagerten Antriebsmittel 35 ist der mit dem Übertragungsmittel 56 versehene Spaltraum 54 der Antriebskupplung 27 ausgebildet. Dem Spaltraum 54, 67 sind unmittelbar benachbart die Regelelemente 73 angeordnet die mit der Steuer- und Regeleinrichtung 25 beispielsweise über eine im Achsstummel 85 verlaufende Leitung 103 und eine Leitung 104 und einem Drehübertrager 105 verbunden sind.

Durch Ansteuerung der Regelelemente 73 über die Steuer- und Regeleinrichtung 25 ist nun wahlweise die Antriebs- und/oder Bremsfunktion durch Einflussnahme auf zumindest einen physikalischen Parameter des Übertragungsmittels 56, wie dies insbesondere bereits in der Beschreibung zur Fig. 3 ausgeführt ist, steuerbar.

Eine mögliche Fördersituation ist bspw. noch der Fig. 5 zu entnehmen, wonach in einem Endbereich 106 der Fördervorrichtung 1 das Stückgut 2 vor einer Weiterförderung mit einem nicht weiter dargestellten Abförderer in einer Warteposition, durch Aktivierung der Bremsfunktion angehalten ist.

Die dieser Fördersektion 13 in Transportrichtung - gemäß Pfeil 23 - vorgelagerte Fördersektion 13 ist im gezeigten Ausführungsbeispiel frei, während in der weiter vorgelagerten Fördersektion 13 ein Stückgut 2, z.B. mittels eines nicht weiter dargestellten Zuförderers belegt ist.

Zur Erzielung eines dichten Anstauens sind nun die, der belegten Fördersektion 13 vorgelagerten Fördersektionen 13 in dem Antriebsmodus mittels der Antriebskupplung 27 aktiviert, bis mittels den Fördersektionen 13 zugeordnete und mit der Steuer- und Regeleinrichtung 25 kommunikationsverbundene Sensoren 107 den steuerungsmäßig vorgegebenen Stauzustand detektieren und die entsprechenden Fördersektionen 13 durch Deaktivierung der Antriebskupplung 27 und Aktivierung der Bremskupplung 28 stillgesetzt werden.

In Abwandlung der vorhergehend beschriebenen Antriebs- und/oder Bremseinheit 100 ist es selbstverständlich möglich, diese bspw. nur mit der Antriebskupplung 27 auszubilden, insbesondere dann, wenn bspw. eine Förderstrecke eine externe Bremseinrichtung an Förderrollen aufweist.

Es ist aber auch denkbar nur die Bremskupplung 28 vorzusehen, bspw. dann, wenn eine Antriebsstrecke durch Stoppen des Antriebsmotors still gesetzt wird und ein gesicherter Stillstand des Transportguts erreicht werden soll.

Unabhängig von den erforderlichen Betriebszuständen der Fördersektionen 13 ist damit ein unterbrechensfreier Dauerbetrieb der Antriebsvorrichtung 15 bzw. des Antriebsmotors 16 möglich wodurch permanente Schalt- und Regelfunktionen des Antriebsmotors 16 vermieden werden.

Die Ausführungsbeispiele zeigen mögliche Ausführungsvarianten der Fördervorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Fördervorrichtung diese bzw. deren Bestandteile teilweise unmaßstäblich und/ oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3; 4; 5; 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Fördervorrichtung
- 2: Stückgut
- 3: Rollenförderer
- 4: Fördermittel
- 5: Förderrolle

- 6: Traggestell
- 7: Stützbein
- 8: Tragprofile
- 9: Transportebene
- 10: Führungsprofil

- 11: Förderbreite
- 12: Rollenlänge
- 13: Fördersektion
- 14: Antriebsstrang
- 15: Antriebsvorrichtung

- 16: Antriebsmotor
- 17: Flachriemenscheibe
- 18: Riemenschlitze
- 19: Spanneinrichtung
- 20: Antriebsriemen

- 21: Flachriemen
- 22: Rollapparat
- 23: Pfeil
- 24: Kupplungs- und/oder Bremsrolle
- 25: Steuer- und Regeleinrichtung

- 26: Kupplung
- 27: Antriebskupplung
- 28: Bremskupplung
- 29: Halterung
- 30: Achse

- 31: Endbereich
- 32: Kugel- oder Wälzlager
- 33: Kugel- oder Wälzlager
- 34: Lageranordnung
- 35: Antriebsmittel

- 36: Fortsatz
- 37: Rollenelement
- 38: Rohr
- 39: Außendurchmesser
- 40: Überlappungsbereich

- 41: Rohr
- 42: Endbereich
- 43: Lageranordnung
- 44: Rillen-Kugellager
- 45: Deckscheibe

- 46: Einlegekeil
- 47: Lagertragring
- 48: Rillen-Kugellager
- 49: Lageranordnung
- 50: Kupplungselement

- 51: Kupplungselement
- 52: Oberfläche
- 53: Oberfläche
- 54: Spaltraum
- 55:

- 56: Übertragungsmittel
- 57: Außendurchmesser
- 58: Innendurchmesser
- 59: Dichtungsring
- 60: Traghülse

- 61: Regelelement
- 62: Elektrospule
- 63: Leitung
- 64: Bremselement
- 65: Längsmittelachse

- 66: Umfangsfläche
- 67: Spaltraum
- 68: Innendurchmesser
- 69: Außendurchmesser
- 70: Vertiefung

- 71: Außenumfang
- 72: Elektrospule
- 73: Regelelement
- 74: Leitung
- 75: Dichtungsring

- 76: Schnurriemen
- 77:
- 78:
- 79:
- 80: Band- oder Riemenförderer

- 81: Untergestell
- 82: Unlenkrollen
- 83: Gurt
- 84: Längsprofile
- 85: Achsstummel

- 86: Abstand
- 87: Stützrolle
- 88: Antriebsmotor
- 89: Antriebsrolle
- 90: Kettenrad

- 91: Kettenrad
- 92: Kettenstrang
- 93: Spannrad
- 94: Linearführung
- 95: Unterseite

- 96: Aufstandsfläche
- 97: Doppelpfeil
- 98: Federanordnung
- 99:
- 100: Antriebs- und/oder Bremseinheit

- 101: Antriebsscheibe
- 102: Nabe
- 103: Leitung
- 104: Leitung
- 105: Drehübertrager

- 106: Endbereich
- 107: Sensor

## Patentansprüche

1. Fördervorrichtung (1) für Stückgut (2) mit zwei Tragprofilen (8) mit zumindest einem Fördermittel (4), z.B. Förderrolle (5), Förderband, Förderkette, für mit diesem zu transportierenden Stückgut (2), z.B. Warenträger, Behälter, Gebinde, Paket etc., mit einer Antriebsvorrichtung (15) und mit zumindest einer betätigbaren Kupplung (26) zwischen einem Antriebsmittel (35) der Antriebsvorrichtung (15) und dem Fördermittel (4), wobei die Kupplung (26) einen zur Aufnahme eines Übertragungsmittels (56) zwischen einem ersten und einem zweiten Kupplungselement (50, 51) ausgebildeten Spaltraum (54, 67) aufweist und dem Spaltraum (54) benachbart ein, eine Kraftkopplung zwischen den Kupplungselementen (50, 51) bewirkendes und von einer Steuer- oder Regeleinrichtung (25) angesteuertes Regelelement (61, 73) angeordnet ist, **dadurch gekennzeichnet, dass** das Antriebsmittel (35) auf einer feststehenden, in Tragprofilen (8) drehfest gehaltenen Achse (30) oder Achsstummeln (85) drehbar gelagert ist und das Regelelement (61, 73) durch eine mit der Achse (30) oder Achsstummeln (85) drehfest verbundene Elektrospule (62, 72) gebildet ist, die über Leitungen (63) mit einer Steuer- oder Regeleinrichtung (25), z.B. Strom- oder Spannungsregler und einer Energiequelle verbunden ist.

2. Fördervorrichtung (1) nach Anspruch 1, **dadurch gekennzeichnet, dass** die Fördervorrichtung (1) eine weitere Kupplung (26) aufweist, die einen zur Aufnahme eines Übertragungsmittels (56) zwischen einem ersten und einem zweiten Kupplungselement (50, 51) ausgebildeten Spaltraum (54, 67) aufweist und dem Spaltraum (54) benachbart ein, eine Kraftkopplung zwischen den Kupplungselementen (50, 51) bewirkendes, und von einer Steuer- oder Regeleinrichtung (25) angesteuertes Regelelement (61, 73) angeordnet ist.

3. Fördervorrichtung (1) nach Anspruch 2, **dadurch gekennzeichnet, dass** eine der Kupplungen (26) als Antriebskupplung (27) und die andere als Bremskupplung (28) ausgebildet ist.

4. Fördervorrichtung (1) nach einem der Ansprüche 1 bis 3, **dadurch gekennzeichnet, dass** ein Kupplungselement (50, 51) durch ein mit der Antriebsvorrichtung (15) antriebsverbundenes Antriebsmittel (35) gebildet ist und ein weiteres Kupplungselement (50, 51) durch ein Rollenelement (37) des Fördermittels(4) gebildet ist.

5. Fördervorrichtung (1) nach einem der Ansprüche 1 bis 3, **dadurch gekennzeichnet, dass** das weitere Kupplungselement (50, 51) durch ein Bremselement (64) gebildet ist.

6. Fördervorrichtung (1) nach Anspruch 1, **dadurch gekennzeichnet, dass** das Übertragungsmittel (56) im Spaltraum (54, 67) durch ein bei einer Energiebeaufschlagung des Regelelements (61) durch die Steuer- und Regeleinrichtung (25) in zumindest einem physikalischen Parameter veränderbares elektrorheologisches Fluid gebildet ist.

7. Fördervorrichtung (1) nach Anspruch 1, **dadurch gekennzeichnet, dass** das Übertragungsmittel (56) im Spaltraum (54, 67) durch ein bei einer Energiebeaufschlagung des Regelelements (61) durch die Steuer- und Regeleinrichtung (25) in zumindest einem physikalischen Parameter veränderbares magnetorheologisches Fluid gebildet ist.

8. Fördervorrichtung (1) nach Anspruch 1, **dadurch gekennzeichnet, dass** das Übertragungsmittel (56) im Spaltraum (54, 67) durch ein bei einer Energiebeaufschlagung des Regelelements (61) durch die Steuer- und Regeleinrichtung (25) in zumindest einem mechanischen Parameter veränderbares elektrorheologisches oder magnetorheologisches pastös- , pulver- oder granulatförmiges Medium gebildet ist.

9. Fördervorrichtung (1) nach Anspruch 1, **dadurch gekennzeichnet, dass** die Steuer- oder Regeleinrichtung (25) zum Aufbau eines Magnetfeldes ausgebildet ist.

10. Fördervorrichtung (1) nach Anspruch 1, **dadurch gekennzeichnet, dass** die Steuer- oder Regeleinrichtung (25) zum Aufbau eines elektrischen Spannungsfeldes ausgebildet ist.

11. Fördervorrichtung (1) nach Anspruch 1, **dadurch gekennzeichnet, dass** die Steuer- oder Regeleinrichtung (25) zum Aufbau eines elektrischen Kraftfeldes ausgebildet ist.

12. Fördervorrichtung (1) nach einem der vorhergehenden Ansprüche, **dadurch gekennzeichnet, dass** zumindest ein physikalischer Parameter des Übertragungsmittels (56), z.B. die Viskosität, Konsistenz etc., durch das Spannungsfeld, Kraftfeld, Magnetfeld etc. des Übertragungsmittels (56) steuer- oder regelbar ist.

13. Fördervorrichtung (1) nach einem der vorhergehenden Ansprüche, **dadurch gekennzeichnet, dass** das Fördermittel (4), vorzugsweise eine Förderrolle (5), mit der/den Kupplung(en) (26) versehen ist, wobei das Fördermittel (4) eine drehfest, bevorzugt in Tragprofilen (8) der Fördervorrichtung (1) gehaltene Achse (30) oder Achsstummeln (85) aufweist und auf dieser relativ zueinander drehbar das Antriebsmittel (35) bzw. das erste Kupplungselement (50, 51) und ein das weitere Kupplungselement (50, 51) ausbildende Rollenelement (37) gelagert sind.

14. Fördervorrichtung (1) nach einem der vorhergehenden Ansprüche, **dadurch gekennzeichnet, dass** das mit der Kupplung (26) versehene Fördermittel (4) vorzugsweise durch eine Umlenkrolle (82) gebildet ist die eine drehfest, bevorzugt in Tragprofilen (8) der Fördervorrichtung (1) gehaltene Achse (30) oder Achsstummel (85) aufweist und auf dieser relativ zueinander drehbar das Antriebsmittel (35) bzw. das erste Kupplungselement (50, 51) und ein das weitere Kupplungselement (50, 51) ausbildende Rollenelement (37)gelagert sind.

15. Fördervorrichtung (1) nach Anspruch 13 oder 14, **dadurch gekennzeichnet, dass** das Antriebsmittel (35) durch eine Rolle, Seilrad, Kettenrad (91) etc. und das mit diesem drehfest verbundene Kupplungselement (50, 51) als Rohrfortsatz (36) ausgebildet ist, der in das Rollenelement (37) einragt.

16. Fördervorrichtung (1) nach Anspruch 4, **dadurch gekennzeichnet, dass** der Spaltraum (54, 67) zwischen einer äußeren Oberfläche (52) des Kupplungselementes (50, 51) und einer inneren Oberfläche (53) des Rollenelementes (37) gebildet ist.

17. Fördervorrichtung (1) nach Anspruch 16, **dadurch gekennzeichnet, dass** der Spaltraum (54, 67) beispielsweise beidseits durch Dichtungsringe (59) begrenzt ist.

18. Fördervorrichtung (1) nach Anspruch 1, **dadurch gekennzeichnet, dass** das Regelelement (61, 73) über in der Achse (30) oder einem der Achsstummeln (85) verlaufende Leitungen (63) mit der Steuer- oder Regeleinrichtung(25), z.B. Strom - oder Spannungsregel und einer Energiequelle verbunden ist.

19. Fördervorrichtung (1) nach einem der vorhergehenden Ansprüche, **dadurch gekennzeichnet, dass** das Fördermittel (4) mit zumindest einer Förderrolle (5) eines Rollenförderers über z.B. einem Treibriemen, Kette, Seil etc. antriebsverbunden ist.

20. Fördervorrichtung (1) nach einem der vorhergehenden Ansprüche, **dadurch gekennzeichnet, dass** das Fördermittel (4) durch einen Band- oder Riemenförderer (80) gebildet ist, der mit dem die Antriebskupplung (27) und/oder die Bremskupplung (28) aufweisenden Antriebsmittel (35) antriebsverbunden ist.

21. Fördervorrichtung (1) nach einem der Ansprüche 1 bis 19, **dadurch gekennzeichnet, dass** das Fördermittel (4) durch einen Kettenförderer gebildet ist, der mit dem die Antriebskupplung (27) und/oder die Bremskupplung (28) aufweisenden Antriebsmittel (35) antriebsverbunden ist.

22. Fördervorrichtung (1) nach einem der vorhergehenden Ansprüche, **dadurch gekennzeichnet, dass** einem Fördermittel (4) einer Fördersektion (13) der Fördervorrichtung (1) eine die Antriebskupplung (27) und/oder die Bremskupplung (28) aufweisende, mit der Antriebsvorrichtung (15) antriebsverbundene, Antriebs- und/oder Bremseinheit (100) vorgeordnet ist.

23. Fördervorrichtung (1) nach Anspruch 22, **dadurch gekennzeichnet, dass** die Antriebskupplung (27) oder die Bremskupplung (28) eine elektro- mechanische Kupplung ist.

24. Fördervorrichtung (1) nach Anspruch 22, **dadurch gekennzeichnet, dass** die Antriebs- und/oder Bremseinheit (100) das Antriebsmittel (35) und eine relativ zum Antriebsmittel (35) drehbare Antriebsscheibe (101) aufweist und die bevorzugt auf einem am Traggestell (6) befestigten Achsstummel (85) drehbar gelagert sind.

25. Fördervorrichtung (1) nach Anspruch 24, **dadurch gekennzeichnet, dass** das Antriebsmittel (35) die Antriebsscheibe (101) bereichsweise koaxial umfasst.

26. Fördervorrichtung (1) nach einem der Ansprüche 24 oder 25, **dadurch gekennzeichnet, dass** das Antriebsmittel (3 5) auf einer Nabe (102) der Antriebsscheibe (101) drehbar gelagert ist.

27. Fördervorrichtung (1) nach einem der Ansprüche 24 bis 26, **dadurch gekennzeichnet, dass** zwischen dem Antriebsmittel (35) und der Antriebsscheibe (101) die Antriebskupplung (27) ausgebildet ist.

28. Fördervorrichtung (1) nach einem der Ansprüche 24 bis 27, **dadurch gekennzeichnet, dass** zwischen der Antriebsscheibe (101) und dem Achsstummel (85) die Bremskupplung (28) ausgebildet ist.

29. Fördermittel (4), insbesondere Förderrolle (5) oder Umlenkrolle (82) für eine Fördervorrichtung (1) mit zwei Tragprofilen (8), mit einem mit einer Antriebsvorrichtung (15) antriebsverbmdbaren Antriebsmittel (35) und einem relativ dazu drehbar gelagerten Rollenelement (37) und mit zumindest einer zwischen dem Antriebsmittel (35) und dem Rollenelement (37) angeordneten Kupplung, wobei die Kupplung (26) einen zur Aufnahme eines Übertragungsmittels (56) zwischen einem ersten und einem zweiten Kupplungselement (50, 51) ausgebildeten Spaltraum (54, 67) aufweist und dem Spaltraum (54) benachbart ein, eine Kraftkopplung zwischen den Kupplungselementen (50, 51) bewirkendes und von einer Steuer- oder Regeleinrichtung (25) angesteuertes Regelelement (61, 73) angeordnet ist, **dadurch gekennzeichnet, dass** die Kupplung (26) als Antriebskupplung (27) und/oder Bremskupplung (28) ausgebildet und innerhalb des Fördermittels (4) angeordnet ist und wobei das Antriebsmittel (35) auf einer feststehenden, in Tragprofilen (8) drehfest anordenbaren Achse (30) oder Achsstummeln (85) drehbar gelagert ist und das Regelelement (61, 73) durch eine mit der Achse (30) oder Achsstummeln (85) drehfest verbundene Elektrospule (62, 72) gebildet ist, die über Leitungen (63) mit einer Steuer- oder Regeleinrichtung (25), z.B. Strom- oder Spannungsregler und einer Energiequelle verbunden ist.

30. Fördermittel (4) nach Anspruch 29, **dadurch gekennzeichnet, dass** zumindest die Antriebskupplung (27) als elektro- mechanische Kupplung ausgebildet und innerhalb des Fördermittels (4) angeordnet ist.

31. Fördermittel (4) nach Anspruch 30, **dadurch gekennzeichnet, dass** zumindest die Bremskupplung (28) als elektromechanische Kupplung ausgebildet und innerhalb des Fördermittels (4) angeordnet ist.

## Claims

1. Conveying device (1) for packaged items (2) comprising two support profiles (8), with at least one conveying means (4), e.g. conveying roller (5), conveyor belt, conveying chain, for packaged items (2) to be transported by the latter, e.g. goods carriers, containers, storage boxes, packages etc., comprising a drive device (15) and at least one operable coupling (26) between a drive means (35) of the drive device (15) and the conveying means (4), and the coupling (26) comprises a gap chamber (54, 67) designed for holding a transmission means (56) between a first and a second coupling element (50, 51) and a regulating element (61, 73) forming a power coupling between the coupling elements (50, 51) and driven by a control or regulating device (25) is disposed adjacent to the gap chamber (54). **characterised in that** the drive means (35) is mounted so as to be rotatable on a stationary axle (30) or axle necks (85) held in a non-rotating arrangement in support profiles (8), and the regulating element (61, 73) is provided in the form of an electric coil (62, 72) non-rotatingly connected to the axle (30) or axle necks (85) which are connected via cables (63) to a control or regulating unit (25), e.g. current or voltage regulator and a power source.

2. Conveying device (1) as claimed in claim 1, **characterised in that** the conveying device (1) comprises a further coupling (26), which comprises a gap chamber (54, 67) designed for holding a transmission means (56) between a first and a second coupling element (50, 51) and a regulating element (61, 73) forming a power coupling between the coupling elements (50, 51) and driven by a control or regulating device (25) is disposed adjacent to the gap chamber (54).

3. Conveying device (1) as claimed in claim 1 or 2, **characterised in that** one of the couplings (26) is designed as a drive coupling (27) and the other is designed as a brake coupling (28).

4. Conveying device (1) as claimed in one of claims 1 to 3, **characterised in that** a coupling element (50, 51) is formed by a drive means (35) which is drive-connected to the drive device (15) and an additional coupling element (50, 51) is formed by a roller element (37) of the conveying means (4).

5. Conveying device (1) as claimed in one of claims 1 to 3, **characterised in that** the additional coupling element (50, 51) is formed by a brake element (64).

6. Conveying device (1) as claimed in claim 1, **characterised in that** the transmission means (56) in the gap chamber (54, 67) is formed by an electro-rheological fluid which can be varied in terms of at least one physical parameter when power is being applied to the regulating element (61) by the control and regulating device (25).

7. Conveying device (1) as claimed in claim 1, **characterised in that** the transmission means (56) in the gap chamber (54, 67) is formed by a magneto-rheological fluid which can be varied in terms of at least one physical parameter when power is being applied to the regulating element (61) by the control and regulating device (25).

8. Conveying device (1) as claimed in claim 1, **characterised in that** the transmission means (56) in the gap chamber (54, 67) is formed by an electro-rheological or magneto-rheological paste-like, powdery or granulate-like medium which can be varied in terms of at least one mechanical parameter when power is being applied to the regulating element (61) by the control and regulating device (25).

9. Conveying device (1) as claimed in claim 1, **characterised in that** the control or regulating device (25) is designed for setting up a magnetic field.

10. Conveying device (1) as claimed in claim 1, **characterised in that** the control or regulating device (25) is designed for setting up an electrical voltage field.

11. Conveying device (1) as claimed in claim 1, **characterised in that** the control or regulating device (25) is designed for setting up an electrical force field.

12. Conveying device (1) as claimed in one of the preceding claims, **characterised in that** at least one physical parameter of the transmission means (56), e.g. the viscosity, consistency etc., can be controlled or regulated by the voltage field, force field, magnetic field etc. of the transmission means (56).

13. Conveying device (1) as claimed in one of the preceding claims, **characterised in that** the conveying means (4), preferably a conveying roller (5), is provided with the coupling(s) (26), whereby the conveying means (4) comprises a non-rotatable axle (30) or axle necks (85) preferably held in support profiles (8) of the conveying device (1), on which the drive means (35) or the first coupling element (50, 51) and a roller element (37) forming the additional coupling element (50, 51) are mounted so as to be rotatable relative to one another.

14. Conveying device (1) as claimed in one of the preceding claims, **characterised in that** the conveying means (4) provided with the coupling (26) is preferably formed by a guiding roller (82), which comprises a non-rotatable axle (30) or axle neck (85), preferably held in support profiles (8) of the conveying device (1), on which the drive means (35) or the first coupling element (50, 51) and a roller element (37) forming the further coupling element (50, 51) are mounted so as to be rotatable relative to one another.

15. Conveying device (1) as claimed in claim 13 or 14, **characterised in that** the drive means (35) is formed by a roller, pulley, sprocket (91) etc. and the coupling element (50, 51) connected to the latter in a non-rotatable manner is designed as a tube extension (36), which projects into the roller element (37).

16. Conveying device (1) as claimed in claim 4, **characterised in that** the gap chamber (54, 67) is formed between an outer surface (52) of the coupling element (50, 51) and an inner surface (53) of the roller element (37).

17. Conveying device (1) as claimed in claim 16, **characterised in that** the gap chamber (54, 67) is delimited for example on both sides by sealing rings (59).

18. Conveying device (1) as claimed in claim 1, **characterised in that** the regulating element (61, 73) is connected preferably by lines (63) running in the axle (30) or the axle neck (85) to the control or regulating device (25), e.g. current or voltage controller and a power source.

19. Conveying device (1) as claimed in one of the preceding claims, **characterised in that** the conveying means (4) is drive-connected to at least one conveying roller (5) of a roller conveyor via e.g. a drive belt, chain, cable etc.

20. Conveying device (1) as claimed in one of the preceding claims, **characterised in that** the conveying means (4) is formed by a band or belt conveyor (80), which is drive-connected to the drive means (35) comprising the drive coupling (27) and/or the brake coupling (28).

21. Conveying device (1) as claimed in one of the preceding claims, **characterised in that** the conveying means (4) is formed by a chain conveyor, which is drive-connected to the drive means (35) comprising the drive coupling (27) and/or the brake coupling (28).

22. Conveying device (1) as claimed in one of the preceding claims, **characterised in that** a drive and/or brake unit (100) ,which is drive-connected to the drive device (15) and comprises the drive coupling (27) and/or the brake coupling (28), is disposed upstream of a conveying means (4) of a conveying section (13) of the conveying device (1).

23. Conveying device (1) as claimed in claim 22, **characterised in that** the drive coupling (27) or the brake coupling (28) is an electro-mechanical coupling.

24. Conveying device (1) as claimed in claim 22, **characterised in that** the drive and/or brake unit (100) comprises the drive means (35) and a drive disc (101) rotatable relative to the drive means (35) and which are preferably mounted rotatably on an axle neck (85) secured onto the support frame (6).

25. Conveying device (1) as claimed in claim 24, **characterised in that** the drive means (35) partially surrounds the drive disc (101) coaxially.

26. Conveying device (1) as claimed in one of claims 24 or 25, **characterised in that** the drive means (35) is preferably mounted rotatably on a hub (102) of the drive disc (101).

27. Conveying device (1) as claimed in one of claims 24 to 26, **characterised in that** the drive coupling (27) is formed between the drive means (35) and the drive disc (101).

28. Conveying device (1) as claimed in one of claims 24 to 27, **characterised in that** the brake coupling (28) is formed between the drive disc (101) and the axle neck (85).

29. Conveying means (4), in particular conveying roller (5) or guiding roller (82) for a conveying device (1) comprising two support profiles (8), with a drive means (35) drive-connected to a drive device (15) and a roller element (37) mounted rotatably relative thereto and with at least one coupling arranged between the drive means (35) and the roller element (37), and the coupling (26) comprises a gap chamber (54, 67) designed for holding a transmission means (56) between a first and a second coupling element (50, 51) and a regulating element (61, 73) forming a power coupling between the coupling elements (50, 51) and driven by a control or regulating device (25) is disposed adjacent to the gap chamber (54), **characterised in that** the coupling (26) is a drive coupling (27) and/or brake coupling (28) and is disposed inside the conveying means (4), and the drive means (35) is mounted so as to be rotatable on a stationary axle (30) or axle necks (85) held in a non-rotating arrangement in support profiles (8), and the regulating element (61, 73) is provided in the form of an electric coil (62, 72) non-rotatingly connected to the axle (30) or axle necks (85) which are connected via cables (63) to a control or regulating unit (25), e.g. current or voltage regulator and a power source

30. Conveying means (4) as claimed in claim 29, **characterised in that** at least the drive coupling (27), is designed as an electro-mechanical coupling and is arranged inside the conveying means (4).

31. Conveying means (4) as claimed in claim 30, **characterised in that** at least the brake coupling (28), is designed as an electro-mechanical coupling and arranged inside the conveying means (4).

## Revendications

1. Dispositif de transport (1) pour des marchandises de détail (2), avec deux profils de support (8) avec au moins un moyen de transport (4), par exemple un rouleau de transport (5), bande de transport, chaîne de transport pour les marchandises de détail (2) à transporter avec celui-ci, par exemple supports de marchandises, contenants, emballages, paquets etc, avec un dispositif d'entraînement (15) et avec au moins un couplage actionnable (26) entre un moyen d'entraînement (35) du dispositif d'entraînement (15) et le moyen de transport (4), où le couplage présente un espace de séparation (54, 67) réalisé pour la réception d'un moyen de transmission (56) entre un premier et un deuxième élément de couplage (50, 51) et, au voisinage de l'espace de séparation (54), un élément de régulation (61, 73) provoquant un couplage de force entre les éléments de couplage (50, 51) et commandé par une installation de commande ou de régulation (25), **caractérisé en ce que** le moyen d'entraînement (35) est logé d'une manière tournante sur un axe fixe (30) retenu avec une résistance à la torsion dans des profilés de support (8) ou des bouts d'axe (85), et que l'élément de régulation (61, 73) est formé par une bobine électrique (62, 72) reliée d'une manière résistante à la torsion à l'axe (30) ou aux bouts d'axes (85), qui est reliée par des conduits (63) à une installation de commande ou de régulation (25), par exemple à un régulateur de courant ou de tension et une source d'énergie.

2. Dispositif de transport (1) selon la revendication 1, **caractérisé en ce que** le dispositif de transport (1) présente un autre couplage (26) qui présente un espace de séparation (54, 67) réalisé pour la réception d'un moyen de transmission (56) entre un premier et un deuxième élément de couplage (50, 51) et, au voisinage de l'espace de séparation (54), est disposé un élément de régulation (61, 73) provoquant un couplage de force entre les éléments de couplage (50, 51) et commandé par une installation de commande ou de régulation (25).

3. Dispositif de transport (1) selon la revendication 2, **caractérisé en ce que** l'un des couplages (26) est réalisé comme couplage d'entraînement (27) et l'autre comme accouplement de frein (28).

4. Dispositif de transport (1) selon l'une des revendications 1 à 3, **caractérisé en ce qu'**un élément de couplage (50, 51) est réalisé par un moyen d'entraînement (35) dont l'entraînement est lié au dispositif d'entraînement (15), et un autre élément de couplage (50, 51) est réalisé par un élément de rouleau (37) du moyen de transport (4).

5. Dispositif de transport (1) selon l'une des revendications 1 à 3, **caractérisé en ce que** l'autre élément de couplage (50, 51) est formé par un élément de frein (64).

6. Dispositif de transport (1) selon la revendication 1, **caractérisé en ce que** le moyen de transmission (56) dans l'espace de séparation (54, 67) est formé par un fluide électro-rhéologique dont au moins un paramètre physique peut être modifié lors d'une sollicitation en énergie de l'élément de régulation (61) par l'installation de commande et de régulation (25).

7. Dispositif de transport (1) selon la revendication 1, **caractérisé en ce que** le moyen de transmission (56) dans l'espace de séparation (54, 67) est formé par un fluide magnéto-rhéologique dont au moins un paramètre physique peut être modifié lors d'une sollicitation en énergie de l'élément de régulation (61) par l'installation de commande et de régulation (25).

8. Dispositif de transport (1) selon la revendication 1, **caractérisé en ce que** le moyen de transmission (56) dans l'espace de séparation (54, 67) est formé par un milieu électro-rhéologique ou magnéto-rhéologique pâteux, pulvérulant ou granuleux, dont au moins un paramètre mécanique peut être modifié lors d'une sollicitation en énergie de l'élément de régulation (61) par l'installation de commande et de régulation (25).

9. Dispositif selon la revendication 1, **caractérisé en ce que** l'installation de commande ou de régulation (25) est réalisée pour l'établissement d'un champ magnétique.

10. Dispositif de transport (1) selon la revendication 1, **caractérisé en ce que** l'installation de commande ou de régulation (25) est réalisée pour l'établissement d'un champ de tension électrique.

11. Dispositif de transport (1) selon la revendication 1, **caractérisé en ce que** l'installation de commande ou de régulation (25) est réalisée pour l'établissement d'un champ de force électrique.

12. Dispositif de transport (1) selon l'une des revendications précédentes, **caractérisé en ce qu'**au moins un paramètre physique du moyen de transmission (56), par exemple la viscosité, la consistance etc. peut être commandé ou réglé par le champ de tension, le champ de force, le champ magnétique etc du moyen de transmission (56).

13. Dispositif de transport (1) selon l'une des revendications précédentes, **caractérisé en ce que** le moyen de transport (4), de préférence un rouleau de transport (5) présente le ou les couplages (26), où le moyen de transport (4) présente un axe (30) ou des bouts d'axe (85) retenus de préférence dans des profilés de support (8) du dispositif de transport (1), et sur celui-ci sont logés d'une manière rotative l'un relativement à l'autre le moyen d'entraînement (35) respectivement le premier élément de couplage (50, 51) et un élément de rouleau (37) réalisant l'autre élément de couplage (50, 51).

14. Dispositif de transport (1) selon l'une des revendications précédentes, **caractérisé en ce que** le moyen de transport (4) muni du couplage (26) est réalisé de préférence par un rouleau de renvoi (82) qui présente un axe (30) ou bout d'axe (85) retenu avec une résistance à la rotation de préférence dans des profilés de support (8) du dispositif de transport (1), et sur celui-ci sont logés, d'une manière rotative l'un relativement à l'autre, le moyen d'entraînement (35) respectivement le premier élément de couplage (50, 51) et un élément de rouleau (37) formant l'autre élément de couplage (50, 51).

15. Dispositif de transport (1) selon la revendication 13 ou 14, **caractérisé en ce que** le moyen d'entraînement (35) est formé par un rouleau, une poulie à câble, une poulie à chaîne (91), et l'élément de couplage (50, 51) relié d'une manière résistante à la torsion avec celui-ci est réalisé comme prolongement tubulaire (36) qui fait saillie dans l'élément de rouleau (37).

16. Dispositif de transport (1) selon la revendication 4, **caractérisé en ce que** l'espace de séparation (54, 67) est formé entre une surface extérieure (52) de l'élément de couplage (50, 51) et une surface intérieure (53) de l'élément de rouleau (37).

17. Dispositif de transport (1) selon la revendication 16, **caractérisé en ce que** l'espace de séparation (54, 67) est délimité par exemple des deux côtés par des bagues d'étanchéité (59).

18. Dispositif de transport (1) selon la revendication 1, **caractérisé en ce que** l'élément de régulation (61, 73) est relié par des conduits (63) s'étendant dans l'axe (30) ou l'un des bouts d'axe (85) à l'installation de commande ou de régulation (25), par exemple au régulateur de courant ou de tension et une source d'énergie.

19. Dispositif de transport (1) selon l'une des revendications précédentes, **caractérisé en ce que** le moyen de transport (4) est relié, quant à son entraînement, à au moins un rouleau de transport (5) d'un convoyeur à rouleaux, par exemple par une courroie de transmission, chaîne, câble etc.

20. Dispositif de transport (1) selon l'une des revendications précédentes, **caractérisé en ce que** le moyen de transport (4) est réalisé par un convoyeur à bande ou à courroie (80), qui est relié, quant à son entraînement, au moyen d'entraînement (35) présentant le couplage d'entraînement (27) et/ou l'accouplement de frein (28).

21. Dispositif de transport (1) selon l'une des revendications 1 à 9, **caractérisé en ce que** le moyen de transport (4) est formé par un convoyeur à chaîne qui est relié, quant à son entraînement, au moyen d'entraînement (35) présentant le couplage d'entraînement (27) et/ou l'accouplement de frein (28).

22. Dispositif de transport (1) selon l'une des revendications précédentes, **caractérisé en ce qu'**il est disposé en amont d'un moyen de transport (4) d'une section de transport (13) du dispositif de transport (1) une unité d'entraînement et/ou de freinage (100) présentant le couplage d'entraînement (27) et/ou l'accouplement de frein (28), reliée, quant à son entraînement, au dispositif d'entraînement (15).

23. Dispositif de transport (1) selon la revendication 22, **caractérisé en ce que** le couplage d'entraînement (27) ou l'accouplement de frein (28) est un couplage électro-mécanique.

24. Dispositif de transport (1) selon la revendication 22, **caractérisé en ce que** l'unité d'entraînement et/ou de freinage (100) présente le moyen d'entraînement (35) et un disque d'entraînement (101) apte à tourner relativement au moyen d'entraînement (35) et qui sont logés d'une manière tournante de préférence sur un bout d'axe (85) fixé au châssis de support (6).

25. Dispositif de transport (1) selon la revendication 24, **caractérisé en ce que** le moyen d'entraînement (35) entoure coaxialement par zones le disque d'entraînement (101).

26. Dispositif de transport (1) selon l'une des revendications 24 ou 25, **caractérisé en ce que** le moyen d'entraînement (35) est logé d'une manière tournante sur un moyeu (102) du disque d'entraînement (101).

27. Dispositif de transport (1) selon l'une des revendications 24 à 26, **caractérisé en ce qu'**est réalisé entre le moyen d'entraînement (35) et le disque d'entraînement (101) le couplage d'entraînement (27).

28. Dispositif de transport (1) selon l'une des revendications 24 à 27, **caractérisé en ce que** l'accouplement de frein (28) est réalisé entre le disque d'entraînement (101) et le bout d'axe (85).

29. Moyen de transport (4), en particulier rouleau de transport (5) ou rouleau de renvoi (82) pour un dispositif de transport (1), avec deux profilés de support (8), avec un moyen d'entraînement (35) apte à être relié pour son entraînement à un dispositif d'entraînement (15) et un élément de rouleau (37) logé d'une manière tournante relativement à celui-ci avec au moins un couplage disposé entre le moyen d'entraînement (35) et l'élément de rouleau (37), où le couplage (26) présente un espace de séparation (54, 67) réalisé pour la réception d'un moyen de transmission (56) entre un premier et un deuxième élément de couplage (50, 51) et, au voisinage de l'espace de séparation (54), est disposé un élément de régulation (61, 73) entraînant un couplage de force entre les éléments de couplage (50, 51), et commandé par une installation de commande ou de régulation (25), **caractérisé en ce que** le couplage (26) est réalisé comme couplage d'entraînement (27) et/ou accouplement de frein (28) et est disposé à l'intérieur du moyen de transport (4), et où le moyen d'entraînement (35) est logé d'une manière tournante sur un axe fixe (30) ou des bouts d'axe (85) pouvant être disposés d'une manière résistante à la torsion dans des profilés de support (8), et l'élément de régulation (61, 73) est formé par une bobine électrique (62, 72) reliée d'une manière résistante à la torsion à l'axe (30) ou aux bouts d'axe (85), qui est reliée par des conduits (63) à une installation de commande ou de régulation (25), par exemple un régulateur de courant ou de tension et une source d'énergie.

30. Moyen de transport (4) selon la revendication 29, **caractérisé en ce qu'**au moins le couplage d'entraînement (27) est réalisé comme couplage électro-mécanique et est disposé à l'intérieur du moyen de transport (4).

31. Moyen de transport (4) selon la revendication 30, **caractérisé en ce qu'**au moins l'accouplement de frein (28) est réalisé comme accouplement électro-mécanique et est disposé à l'intérieur du moyen de transport (4).
